Europäisches Patentamt

(19) European Patent Office

Office européen des brevets

(11) Publication number: **0 081 592**
**B1**

(12) **EUROPEAN PATENT SPECIFICATION**

(45) Date of publication of patent specification: **14.01.87**

(51) Int. Cl.⁴: **C 22 C 38/38, F 16 D 65/12**

(21) Application number: **82901623.7**

(22) Date of filing: **28.05.82**

(86) International application number:
**PCT/JP82/00210**

(87) International publication number:
**WO 82/04268 09.12.82 Gazette 82/29**

(54) **BRAKE DISCS OF LOW-CARBON MARTENSITIC STAINLESS STEEL.**

(30) Priority: **30.05.81 JP 83132/81**

(43) Date of publication of application:
**22.06.83 Bulletin 83/25**

(45) Publication of the grant of the patent:
**14.01.87 Bulletin 87/03**

(84) Designated Contracting States:
**DE FR**

(56) References cited:
**FR-A-1 544 296**
**GB-A- 883 712**
**GB-A-1 221 584**
**GB-A-2 027 745**
**JP-A-55 021 566**

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(72) Inventor: **YOSHIOKA, Keiichi**
**1351 Sonno-cho Chiba-shi**
**Chiba 281 (JP)**
Inventor: **KINOSHITA, Noboru**
**2578-64, Shiizu Ichihara-shi**
**Chiba 299-01 (JP)**
Inventor: **ONO, Yutaka**
**611-136, Semata Ichihara-shi**
**Chiba 290-01 (JP)**

(74) Representative: **Overbury, Richard Douglas et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to materials for brake discs for motorcycles and motor cars and is concerned with providing such materials which are low carbon martensitic stainless steels and which are easy to produce and have high rust resistance as well as excellent toughness and abrasion resistance.

Presently, stainless steels are used for the brake discs of motor cycles. Such discs need to have high corrosion resistance, toughness and abrasion resistance. The abrasion resistance becomes generally higher with an increase in hardness, while the toughness becomes lower. Because of this point, the hardness of the brake disc is limited to a range of 30—40 ($H_R$C).

As stainless steels for this application, use has been made of high carbon martensitic stainless steels, such as 16Cr—0.3C, SUS 420J1 having C of 0.2% and SUS 420J2 having C of 0.3%. In order to produce the desired properties when using these brake disc materials, heat treatments such as quenching from a temperature of 850—1,050°C or said quenching and tempering are carried out.

However, in such prior steels, the amount of carbon is as high as 0.2—0.3% and the hardness of the martensite itself, caused during quenching, is as high as 50—60 ($H_R$C). Thus the toughness is poor and quenching cracks are readily caused by the quenching.

Accordingly, in order to control the hardness to 30—40 ($H_R$C) only by quenching, the steel should be a mixed structure wherein two phases of martensite and ferrite are mixed in a moderate ratio and the ratio varies depending upon the temperature of heat treatment for quenching (and particularly suddenly varies in the range of 800—900°C) and the hardness varies from about 5 to 45 ($H_R$C). In addition, the hardness is apt to be affected by slight variations in the components of the steel. Thus a very strict and severe control of quality and control of the conditions of the quenching heat treatment are required during production.

Furthermore, when quenching and tempering are carried out, quenching cracks are formed during hardening and this causes processing problems. Also, the tempering is usually effected within a range of 550—650°C in order to control the hardness to the range of 30—40 ($H_R$C) so that a zone of low Cr concentration is formed around the carbide and nitride of Cr which are precipitated as a result of this heat treatment. This lowers the corrosion resistance.

An object of the present invention is to provide brake discs formed of a low carbon martensitic stainless steel whereby the difficulties of the prior art are solved in that the desired properties for the brake disc can be obtained merely by quenching from a broad range of temperatures without the need for a severe heat treatment. Thus production is facilitated.

Low carbon martensitic stainless steels are known per se. For example, GB—A—2 027 745 discloses a martensitic stainless steel having excellent weldability and workability and being suitable for structural use, the steel consisting of not more than 0.02% C, not more than 0.02% of N, from 1.0 to 3.5% of Mn, not more than 1.0% Cu; less than 0.1% Ni, from 10 to 13.5% Cr and not more than 0.5% Si, the remainder being iron and incidental elements and impurities. Also GB—A—883 712 discloses a martensitic steel for the fabrication of, for example, steam turbine parts by welding, which steel consists of from 9 to 14% by weight Cr, from 0 to 0.4% by weight Si, from .02 to .06% by weight C, from .01 to .04% N, not more than .08% by weight C+N, from 0 to 4% by weight Ni, and from 0 to 6% by weight Mn, the remainder being Fe. However, there has been no suggestion that the use of such steels would be advantageous in brake disc manufacture.

According to the present invention there is provided a brake disc formed of a low carbon martensitic stainless steel having a composition consisting of 0.04 to 0.10% by weight C+N, not greater than 0.5% by weight of Si, from 1.0 to 2.5% by weight of Mn, not greater than 0.5% by weight of Ni, not greater than 0.5% by weight of Cu, and from 10.0 to 14.5% by weight of Cr, the remainder being Fe less than 0.05% Al and impurities.

In accordance with the present invention, a structure consisting substantially of austenite single phase is obtained over a broad range of heat treatment (from about 850—1,050°C) by increasing the Mn content to 1.0—2.5% even with a low content of C+N of 0.04—0.10% without increasing the carbon content to a high value. The hardness and toughness needed for motorcar brake discs are easily obtained by transforming the structure into martensite merely by quenching from the above described temperature range. The excellent corrosion resistance is provided by including 10.0—14.5% of Cr without causing deterioration due to tempering.

An explanation will now be made with respect to the reason for limiting the components of the low carbon martensitic stainless steels used in the present invention.

C+N: 0.40—0.10%:

C and N are effective elements for improving the hardness and abrasion resistance and in the present invention, 1.0—2.5% of Mn is essential for the below described reason. For a Mn content in this range, the content of C+N for obtaining the hardness on quenching of 30—40 ($H_R$C) is 0.04—0.10%, so that this C+N content is limited to the range of 0.04—0.10%. This value is smaller than the content of the prior steels used for brake discs so that the toughness on quenching is good and no quenching cracks are formed.

Si: not greater than 0.5%:

Si is an element for forming ferrite at high temperatures and the addition of Si of more than 0.5% deteriorates the quenching hardness and adversely affects the toughness. Thus the upper limit is 0.5% but the amount is preferred to be smaller.

Mn: 1.0—2.5%:

Mn is an effective element for preventing the formation of δ-ferrite at high temperatures and is an essential component for attaining the object of the present invention. However, when the content is less than 1%, if the content of C+N is low, δ-ferrite is formed even at a temperature range of 900—1,050°C and the quenching hardness of 30—40 ($H_RC$) is not obtained. Thus, in order to provide a hardness of 30—40 ($H_RC$), the content of C+N should be increased to a higher concentration but the concentration range of the necessary content of C+N is very narrow and it is difficult to stably control the concentration range in the steel making step. Further if Mn is less than 1%, the temperature range of the quenching heat treatment for providing the hardness of 30—40 ($H_RC$) is very narrow and the temperature control becomes difficult, so that the lower limit is set at 1% in view of the object of the present invention. When Mn exceeds 2.5%, the oxidation resistance at high temperatures is lowered, there is much scale formation during the steps for producing the steel sheet, the sheet surface is roughened upon pickling, and the dimension precision of the steel sheet is considerably deteriorated. Thus the upper limit is set at 2.5%.

Ni: not greater than 0.5%:

Ni is effective for preventing the formation of δ-ferrite at high temperatures in a similar way to Mn. In the present invention, this object can be attained by the addition 1.0—2.5% of Mn so that it is not necessary to particularly add Ni. However it is inevitable that about 0.1—0.5% of Ni is admixed from scrap used in the steel making steps and the presence of such an amount does not disturb the above described balance and does not cause any particular hindrance. Thus only the upper limit needs to be fixed and this is 0.5%.

Cu: not greater than 0.5%:

Cu is effective for preventing the formation of δ-ferrite at high temperatures in a similar way to Ni. In the present invention, since Mn is added, it is not necessary to particularly add Cu but when the Cu content exceeds 0.5%, as a consequence of the addition of scrap in the steel making process, the hot workability at high temperatures is deteriorated and the yield in the process for producing the steel sheets is considerably reduced. Thus the upper limit is set at 0.5%.

Cr: 10.0—14.5%:

Cr is essential in an amount of at least 10% for maintaining the corrosion resistance. However, when Cr exceeds 14.5%, even if the upper limit for each of Mn, Ni and Cu is reached, δ-ferrite is formed even in a quenching temperature range of 850—1,050°C and a quenching hardness of 30—40 ($H_RC$) cannot be obtained. Thus the upper limit is set at 14.5%.

With regard to elements present in the steel composition as incidental elements and impurities, P should be lowered as far as possible in view of the toughness and S is preferred to be low in view of the rust resistance. O is harmful for toughness and rust resistance, so that it is preferable to effect deoxidation using Al. The Al content in the steel should be less than 0.05%. Furthermore, rare earth elements may be added in order to improve the corrosion resistance and toughness by controlling the shape of the sulfides.

As mentioned above, in martensitic stainless steels of the present invention, by limiting Mn in the component composition to 1.0—2.5%, a hardness of 30—40 ($H_RC$) and high toughness can be ensured without forming quenching cracks merely by quenching from the broad temperature range of 850—1,050°C without needing a strict control of the heat treatment even with a low content of C+N 0.04—0.10%. Also it is not necessary to effect tempering, so that the improvement in corrosion resistance due to the addition of Cr can be effectively attained and all the various properties necessary for brake discs can be provided.

The following Examples illustrate the invention.

50 kg amounts of Steels No. 1—No. 10 shown in the following Table 1 were melted in a high frequency small size melting furnace and subjected to hot rolling and annealing under well known conditions to prepare a hot rolled annealed sheet of thickness 6 mm. Then the annealed sheet was kept at a temperature range of 800—1,050°C for 5 minutes and thereafter oil quenched. The relationship between the quenching temperature and the hardness, toughness and corrosion resistance was then examined. Steels Nos. 1—5 are steels of the present invention and Steels Nos. 6—10 are comparative steels which are outside the scope of the present invention.

# 0 081 592

## TABLE 1

| | Steel No. | Chemical components (weight %) | | | | | | | | |
|---|---|---|---|---|---|---|---|---|---|---|
| | | C | N | Si | Mn | P | S | Ni | Cu | Cr |
| Present invention | 1 | 0.030 | 0.025 | 0.14 | 1.69 | 0.019 | 0.001 | 0.12 | 0.005 | 13.1 |
| | 2 | 0.055 | 0.015 | 0.16 | 1.41 | 0.021 | 0.002 | 0.05 | 0.006 | 12.5 |
| | 3 | 0.076 | 0.010 | 0.15 | 1.23 | 0.020 | 0.005 | 0.35 | 0.23 | 12.0 |
| | 4 | 0.061 | 0.014 | 0.15 | 1.36 | 0.020 | 0.004 | 0.23 | 0.12 | 13.9 |
| | 5 | 0.052 | 0.008 | 0.16 | 1.80 | 0.019 | 0.004 | 0.09 | 0.11 | 14.1 |
| Comparative steel | 6 | 0.021 | 0.015 | 0.15 | 1.42 | 0.021 | 0.002 | 0.09 | 0.005 | 13.0 |
| | 7 | 0.12 | 0.014 | 0.14 | 1.51 | 0.021 | 0.003 | 0.19 | 0.006 | 12.9 |
| | 8 | 0.20 | 0.021 | 0.35 | 0.50 | 0.020 | 0.002 | 0.08 | 0.11 | 13.5 |
| | 9 | 0.31 | 0.015 | 0.31 | 0.44 | 0.020 | 0.004 | 0.07 | 0.07 | 13.5 |
| | 10 | 0.30 | 0.013 | 0.50 | 0.45 | 0.020 | 0.004 | 0.15 | 0.08 | 16.1 |

The relationship between the Rockwell hardness and the quenching temperature is shown in Table 2.

## TABLE 2

| | Steel No. | Quenching temperature | Rockwell hardness $H_RC$ | | | | | |
|---|---|---|---|---|---|---|---|---|
| | | | 800°C | 850°C | 900°C | 950°C | 1,000°C | 1,050°C |
| Present invention | 1 | | 6.8 | 31.9 | 31.5 | 31.2 | 31.8 | 31.5 |
| | 2 | | 7.2 | 34.0 | 34.4 | 34.5 | 34.0 | 34.8 |
| | 3 | | 10.5 | 38.1 | 38.5 | 38.3 | 38.0 | 37.9 |
| | 4 | | 7.5 | 35.5 | 35.3 | 36.0 | 35.4 | 35.7 |
| | 5 | | 18.5 | 34.0 | 33.5 | 33.8 | 33.3 | 33.6 |
| Comparative steel | 6 | | 5.2 | 20.1 | 23.2 | 25.6 | 28.7 | 28.0 |
| | 7 | | 25.6 | 45.3 | 46.0 | 46.3 | 46.0 | 45.8 |
| | 8 | | 5.8 | 28.2 | 42.1 | 45.3 | 50.3 | 51.0 |
| | 9 | | 5.5 | 32.1 | 46.1 | 52.3 | 56.1 | 57.4 |
| | 10 | | 7.7 | 28.3 | 35.0 | 42.3 | 54.4 | 54.5 |

In the comparative steels, the temperature range for obtaining the quenching hardness of 30—40 ($H_RC$) is very narrow, while in the steels of the present invention, the temperature range is as broad a 850—1,050°C.

The relationship between the results of the impact test at room temperature and the quenching temperature using test pieces according to JIS No. 4, 1/2 size is shown in Table 3.

4

# 0 081 592

## TABLE 3

| Steel No. / Quenching temperature | Impact value at room temperature (kgf·/m/cm²) | | | | | |
|---|---|---|---|---|---|---|
| | 800°C | 850°C | 900°C | 950°C | 1,000°C | 1,050°C |
| **Present invention** | | | | | | |
| 1 | 10.0 | 10.3 | 9.8 | 8.9 | 9.8 | 10.0 |
| 2 | 9.5 | 9.6 | 9.2 | 7.7 | 6.1 | 5.6 |
| 3 | 8.1 | 8.3 | 6.2 | 5.7 | 5.5 | 5.3 |
| 4 | 9.8 | 9.7 | 9.3 | 9.0 | 9.5 | 9.7 |
| 5 | 11.1 | 11.2 | 10.8 | 11.1 | 11.0 | 10.9 |
| **Comparative steel** | | | | | | |
| 6 | 9.8 | 9.5 | 9.8 | 9.6 | 9.7 | 9.4 |
| 7 | 6.7 | 4.3 | 2.1 | 1.5 | 1.2 | 0.7 |
| 8 | 3.5 | 2.0 | 1.5 | 1.3 | 0.7 | 0.3 |
| 9 | 2.6 | 1.7 | 1.6 | 1.1 | 0.7 | 0.3 |
| 10 | 8.2 | 5.8 | 1.5 | 0.7 | 0.7 | 0.7 |

As seen from Table 3, the steels of the present invention (which have a quenching hardness of 30—40 ($H_RC$) have a far higher toughness than the comparative steels and the impact value over the broad range of quenching temperature of 850—1,050°C is more than 5 kgf · m/cm². Also the steels of the present invention have a satisfactory toughness and do not exhibit quenching cracks.

The relationship between the results of a salt spray test (as defined in JIS Z2371) and the quenching temperature is shown in Table 4.

5

TABLE 4

| | | Salt spray test (35°C, 4 hr) | | | | | |
|---|---|---|---|---|---|---|---|
| Steel No. | Quenching temperature | 800°C | 850°C | 900°C | 950°C | 1,000°C | 1,050°C |
| Present invention | 1 | o | o | o | o | o | o |
| | 2 | o | o | o | o | o | o |
| | 3 | o | o | o | o | o | o |
| | 4 | o | o | o | o | o | o |
| | 5 | o | o | o | o | o | o |
| Comparative steel | 6 | o | o | o | o | o | o |
| | 7 | o | o | o | o | o | o |
| | 8 | x | x | o | o | o | o |
| | 9 | x | x | o | o | o | o |
| | 10 | x | x | o | o | o | o |

o: No rust
x: Rust

The steels of the present invention do not rust over the broad quenching temperature range of 800—1,050°C and have high corrosion resistance.

By using the steels specified by the present invention, the moderate hardness and toughness and the excellent corrosion resistance necessary for brake discs can be obtained merely by quenching from a broader range of quenching temperature than in accordance with the prior art. Thus mass production on an industrial scale can be easily realised and production costs can be reduced.

**Claim**

A brake disc formed of a low carbon martensitic stainless steel having a composition consisting of 0.04 to 0.10% by weight C+N, not greater than 0.5% by weight of Si, from 1.0 to 2.5% by weight of Mn, not greater than 0.5% by weight of Ni, not greater than 0.5% by weight of Cu, and from 10.0 to 14.5% by weight of Cr, the remainder being Fe, less than 0.05% Al and impurities.

**Patentanspruch**

Schweibenbremse aus kohlenstoffarmem martensitischen rostfreien Stahl, der die folgende Zusammensetzung hat: 0,04 bis 0,10 Gew.-% C und N, nicht mehr als 0,5 Gew.-% Si, von 1,0 bis 2,5 Gew.-% Mn, nicht mehr als 0,5 Gew.-% Ni, nicht mehr als 0,5 Gew.-% Cu sowie von 10,0 bis 14,5 Gew.-% Cr, wobei der Rest auf Fe, weniger als 0,05% Al und Verunreinigungen entfällt.

**Revendication**

Un disque de frein fabriqué à partir d'un acier inoxydable martensitique à faible teneur en carbone, ayant une composition qui comprend entre 0,04 et 0,10% en poids de C+N, pas plus de 0,5% en poids de Si, entre 1,0 et 2,5% en poids de Mn, pas plus de 0,5% en poids de Ni, pas plus de 0,5% en poids de Cu, et entre 10,0 et 14,5% en poids de Cr, le reste étant du Fer, moins de 0,05% de Al, et des impuretés.